(19) Europäisches Patentamt
European Patent Office
Office européen des brevets

(11) **EP 3 147 065 B1**

(12) **EUROPEAN PATENT SPECIFICATION**

(45) Date of publication and mention
of the grant of the patent:
**24.07.2019  Bulletin 2019/30**

(51) Int Cl.:
***B23K 11/11*** *(2006.01)*

(21) Application number: **15186577.1**

(22) Date of filing: **23.09.2015**

(54) **WELDING METHOD**

SCHWEISSVERFAHREN

PROCÉDÉ DE SOUDAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.03.2017  Bulletin 2017/13**

(73) Proprietor: **Neturen Co., Ltd.
Tokyo 141-8639 (JP)**

(72) Inventors:
• **Terajima, Akira
Tokyo, 1418639 (JP)**
• **Kawasaki, Kazuhiro
Tokyo, 1418639 (JP)**
• **Ikuta, Fumiaki
Tokyo, 1418639 (JP)**
• **Koyata, Yasuyuki
Tokyo, 1418639 (JP)**
• **Misaka, Yoshitaka
Tokyo, 1418639 (JP)**

(74) Representative: **Henkel, Breuer & Partner
Patentanwälte
Maximiliansplatz 21
80333 München (DE)**

(56) References cited:
**EP-A1- 2 474 381        EP-A1- 2 769 797
WO-A1-2014/148341    US-A1- 2015 217 396**

**Description**

Field of the Invention

The present invention relates to a method of spot welding steel sheets in a stack and a weld structure manufactured by the same.

Background Art

A method of welding a plurality of steel sheets in a stack includes spot welding method. In the spot welding method, a plurality of steel sheets are stacked and sandwiched between a paired electrodes, and then electrical current is applied between the paired electrodes under pressure along the rods of the paired electrodes. The electrical current resistive-heats to melt the sandwiched portions in an area having a predetermined diameter and then the melted portions solidify, and thus a melted and solidified portion referred to as weld nugget is formed.

In recent years, steel sheets high in tensile strength have been used as the materials for body of automobiles, and steel sheets high in tensile strength is welded by spot welding to achieve both the weight reduction and the safety in automobiles. Two methods represent measuring methods for the spot welding strength. The first method welds the stacked edge portion of the two rectangular steel sheets followed by applying tensile forces in the directions along the surface planes of the two plates. The second method welds the crossed two rectangular steel sheets at crossing center followed by applying tensile forces in the directions rectangular to the surface plane of the two plates at both ends of each of the steel sheets. The first method is referred to as the TSS (Tensile Shear Strength) test, and the second method is referred to as the CTS (Cross Tension Strength) test.

Regarding a carbon steel excellent in both ductility and toughness, a dual-phase steel having fine crystal grains has been investigated, and the segregation of carbides at the grain boundary is known as an effective mean (JP 2007-332457 A). Although the increased carbon content in the material is required to segregate carbides at the grain boundary, as high carbon content makes the spot weld zone too hard, the brittle spot weld zone cause a problem that the weld strength remarkably decreases. So, the carbon content is controlled to be about 0.15 mass % or less in the steel sheets for automobiles widely used.

Among the methods of spot welding the steel sheets, the method first conducting low-frequency electrical current application and then conducts the high-frequency electrical current application is known (WO 2011/013793 A).

The EP 2474381 A1 discloses a welding method with the features of the preamble of claim 1.

Summary of the invention

Problems to be solved by the invention

Regarding the strength in the spot weld zone, with the increased tensile strength of a steel sheet, the CTS first increase in proportion, but the CTS may decrease in a steel sheet having a tensile strength of a certain value or more. The matter may be caused by the too much enhanced tensile strength of the steel sheet, the concentrated stress at the spot weld zone, or the poor toughness at the spot weld zone. So, just the spot welding on steel sheets low in carbon content has been investigated.

Means to solve the problem

An object of the present invention is to provide a welding method which recovers the strength of a spot weld zone, namely, the ductility and the toughness of the spot weld zone to prevent the fracture of the spot weld zone.

To achieve the object, the present invention provides a welding method for spot welding steel sheets comprising the features of claim 1. In the welding method according to the present invention the steel sheets are heat treated and spot welded and a spot weld zone composed of a weld nugget and a heat affected zone is formed at the outer periphery of the weld nugget, spot welded steel sheets are tempering treated by applying a high-frequency electrical current on the spot weld zone and a heat accumulation zone elevated in temperature is formed at the outer periphery of the weld nugget and a hardness at the weld nugget is made 150% or less of the hardness of the heat treated steel sheets and a hardness at the heat affected zone is made 30% to 90% of the hardness at the weld nugget before the tempering treatment; and the diameter of the weld nugget NR in mm satisfies the conditional expression (1).

$$3\sqrt{t} \leqq NR \cdot \cdot \cdot (1)$$

where, t is the average thickness of the heat treated steel sheets

The welding method according to the present invention is preferable that a tensile strength of the heat treated steel sheets is 0.77 GPa or more and 2.0 GPa or less.

The welding method according to the present invention is preferable that the heat treated steel sheets are the quenching treated steel sheets elevated a temperature equal to or higher than the transformation temperature and cooled rapidly or a normalizing treated steel sheets.

The welding method according to the present invention is preferable that a carbon content of the steel sheets before the heat treatment is 0.15 mass % or more and 0.55 mass % or less.

Advantages of the invention

In the present invention, the spot weld zone after finishing spot welding of the steel sheets increased in tensile strength by the heat treatment is applied a high-frequency electrical current to form a heat accumulation zone elevated a temperature at the outer periphery of the weld nugget, heat transfer occurs along both directions from the heat affected zone in the spot weld zone toward inside, namely, toward the central portion of the spot weld zone, namely, the so-called weld nugget; and heat transfers from the heat affected zone in the spot weld zone toward outside, i.e. heat transfers toward both the central portion of the spot weld zone and outside of the spot weld zone. So, the central portion and the outside portion of the spot weld zone quenched in spot welding are tempering treated. As a result, the ductility and the toughness of the spot weld zone is recovered. As a results, as the hardness at the weld nugget, the central portion of the spot weld zone, is made 150% or less of the hardness of the heat treated steel sheets, and further the hardness at the heat affected zone at the outer periphery of the weld nugget, in particular, the corona bond which might be a fracture origin in the heat affected zone is 30% to 90% of the hardness at the weld nugget before the tempering treatment by the high-frequency electrical current application; and a diameter of the weld nugget NR (mm) satisfy the conditional expression (1) described above, the spot weld zone hardly fractures.

Brief description of the drawings

FIG. 1 is a chart showing the electrical current application sequence in the welding method according to an embodiment of the present invention;

FIG, 2 is a diagram schematically illustrating mechanism of the cooling in the steel sheets in the cooling period of the third step;

FIG. 3 is a diagram schematically illustrating mechanism of the heating in steel sheets by the high-frequency electrical current application;

FIG. 4 is a diagram schematically illustrating mechanism of the tempering after the high-frequency electrical current application;

FIG. 5 is a diagram schematically showing the cross section of a cruciform test piece manufactured by the welding method employing the condition shown in FIG. 1;

FIG. 6(a) is a diagram schematically showing the vertical cross section of a cruciform test piece, and FIG. 6(b) is a chart showing an example of the hardness distribution along the longitudinal cross sectional direction of the cruciform test piece of FIG. 6(a);

FIG. 7 is a diagram showing the heat cycle in the heat treatment, the microstructure, the hardness and the tensile strength of the steel sheet specimens in Examples 1 to 3 and Comparative Examples 1 to 3;

FIG. 8(a) is a chart showing the electrical current application sequence in Examples 1 to 3, and FIG. 8(b) is a chart showing the electrical current application sequence in Comparative Examples 1 to 3;

FIG. 9 is a diagram showing the heat cycle in the heat treatment of the steel sheet specimen, the microstructure, the hardness and the tensile strength of the heat treated steel sheet specimens in Example 6;

FIG. 10 is a chart showing the load-stroke curves in the CTS measurement in Examples 1 to 3 and Comparative Examples 1 to 3;

FIG. 11 is a diagram showing the evaluation results in Examples 1 to 3 and Comparative Examples 1 to 3;

FIG. 12 is a diagram summarized the observed images of the macro patterns and the microstructures in the corona bonds; and the charts showing the hardness distributions among the evaluation results of Example 1 and Comparative Example 1;

FIG. 13 is a diagram summarized the observed images of the macro patterns and the microstructures in the corona bonds; and the charts showing the hardness distributions among the evaluation results of Example 2 and Comparative Example 2;

FIG. 14 is a diagram summarized the observed images of the macro patterns and the microstructures in the corona bonds; and the charts showing the hardness distributions among the evaluation results of Example 3 and Comparative Example 3;

FIG. 15 a chart showing the load-stroke curves in the CTS measurement in Examples 4 to 6 and Comparative Examples 4 to 6;

FIG. 16 is a diagram showing the evaluation results in Examples 4 to 6 and Comparative Examples 4 to 6;

FIG. 17 is a diagram showing relationship between CTS and the diameter of the weld nugget;

FIG. 18 is a diagram summarized the observed images of the macro patterns and the microstructures in the corona bonds; and the charts showing the hardness distributions among the evaluation results of Example 6 and Comparative Example 4;

FIG. 19 is a diagram summarized the observed images of the macro patterns and the microstructures in the corona bonds; and the charts showing the hardness distributions among the evaluation results of Example 7 and Comparative Example 5;

FIG. 20 is a diagram summarized the observed images of the macro patterns and the microstructures in the corona bonds; and the charts showing the hardness distributions among the evaluation results of Example 8 and Comparative Example 6;

FIG. 21 is a chart showing the relation between carbon content and CTS for each electrical power in the high-frequency electrical current post heating.

## DETAILED DESCRIPTION OF THE PREFERRED EMBODIMENTS

The embodiments of the present invention will be described with reference to the drawings. The welding method according to the present invention is characterized in that the steel sheets are heat treated and spot welded and a spot weld zone composed of a weld nugget and a heat affected zone is formed at the outer periphery of the weld nugget, spot welded steel sheets are tempering treated by applying a high-frequency electrical current on the spot weld zone and a heat accumulation zone elevated a temperature is formed at the outer periphery of the weld nugget and a hardness at the weld nugget is made 150% or less of the hardness of the heat treated steel sheets and a hardness at the heat affected zone is made 30% to 90% of the hardness at the weld nugget before the tempering treatment; and the diameter of the weld nugget NR (mm) satisfies the conditional expression (1).

$$3\sqrt{t} \leqq NR \cdot \cdot \cdot (1)$$

where, t is the average thickness of the heat treated steel sheets

The carbon content of the steel sheets before the heat treatment to be welded according to the present invention is preferable to be 0.15 mass % or more and 0.55 mass % or less. If the carbon content of the steel sheets before the heat treatment is less than 0.15 mass %, as the quenching treatment hardly finish in the steel sheets, the steel sheets are hardly transformed into martensite in welding and the matter makes effects of the high-frequency electrical current application poor. Note that, steel sheets having a carbon content exceeding 0.55 mass % are not used in general.

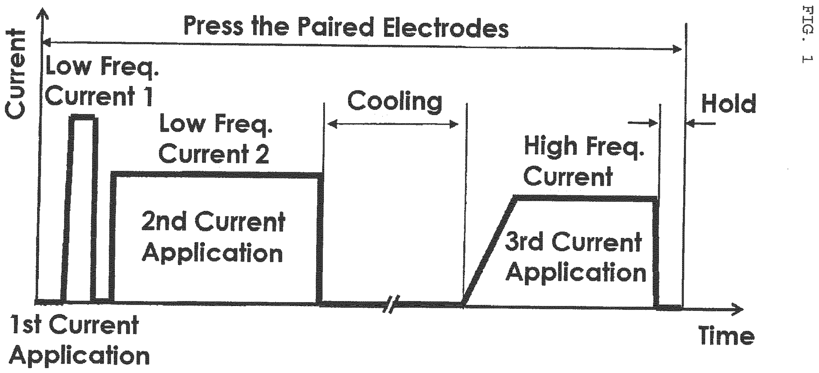

The welding method according to the embodiment of the present invention in which steel sheets are stacked and spot welded will be described with reference to the electrical current application sequence shown in FIG. 1. The welding method of the present invention is constituted by the first to fourth steps.

First step: The first step is the pretreatment step of spot welding and conducts the heat treatment on steel sheets. The heat treatment as the pretreatment step may employ a quenching treatment, a normalizing treatment or other various heat treatments.

In the quenching treatment in the present invention, temperature of the steel sheets are elevated to a temperature equal to or higher than the transformation temperature followed by rapid cooling. Then, the steel sheets are tempering treated at a temperature equal to or lower than the transformation temperature for a relatively long period of time. The heat treatment employing quenching treatment transforms microstructure of the carbon steel into martensite. The normalizing treatment in the present invention, temperature of the steel sheets elevate relatively slowly to a predetermined temperature and keep for a certain period of time. The heat treatment employing normalizing treatment transforms the microstructure of the carbon steel into a dual-phase microstructure composed of ferrite and perlite.

As described above, the heat treatment employing quenching treatment or normalizing treatment enhances the tensile strength of the steel sheets to be 0.77 GPa or more and 2.0 GPa or less. The tensile strength of the heat treated steel sheets of 0.77 GPa or more and 2.0 GPa or less achieves the high strength and the weight reduction in the steel sheets while maintaining the ductility and the toughness in the steel sheets.

Second step: The second step stacks and spot welds a plurality of the steel sheets heat treated in the first step. In the spot welding, the heat treated steel sheets in a stack are sandwiched with a rod-like paired electrodes extending perpendicular to the steel sheets under pressure, and the steel sheets are welded by the electrical current application into the steel sheets. The electrical current may be a direct current or a low-frequency electrical current having frequency of the commercially available electrical power supply. The spot welding may employ a conventional spot welding method. For example, the electrical current application may be conducted in two stages as shown in FIG. 1: "the first electrical current application" and "the second electrical current application". "The first electrical current application" conducted prior to "the second electrical current application" as the final welding removes the oxide scales on the heat treated steel sheets which disturb the spot welding to avoid poor welding. "The second electrical current application" applying electrical current for a longer time than in "the first electrical current application" forms a weld nugget (portion melted and solidified) between the steel sheets in a stack, a buckling and a concave region sandwiched by the rod-like paired electrodes.

Third step: The third step cools the weld nugget of the steel sheets spot welded by keeping for a predetermined cooling period while being sandwiched with the pair of upper and lower electrodes under pressure as it is. The cooling period is preferable to be 0.4 seconds to 1.0 second. This is because if the cooling period is less than 0.4 seconds, the spot weld zone cannot be cooled to a temperature lower than the temperature for martensite transformation (hereinafter referred to as "Ms-temperature"), and the transformation into the martensite microstructure high in ductility and toughness cannot be achieved after the tempering treatment of the spot weld zone by the high-frequency electrical current application in the subsequent fourth step. If the cooling period exceeds 1.0 second, the productivity is made poor. The Ms-temperature is determined depending on the steel sheet composition, in particular, the percent-by-mass value of carbon. Further heating at the portion cooled to a temperature lower than the Ms-temperature in the subsequent fourth step transforms the portion into the martensite microstructure enhanced the ductility and the toughness. As the temperature of the spot weld zone is cooled to a temperature lower than the Ms-temperature in the present invention, the spot weld zone and the neighboring zone elevated temperature in the subsequent fourth step do not provide a temperature distribution that makes the hardness rapidly decreases and then increases again. So, the poor fracture mode or the less fracture strength in both the spot weld zone and the neighboring zone does not occur.

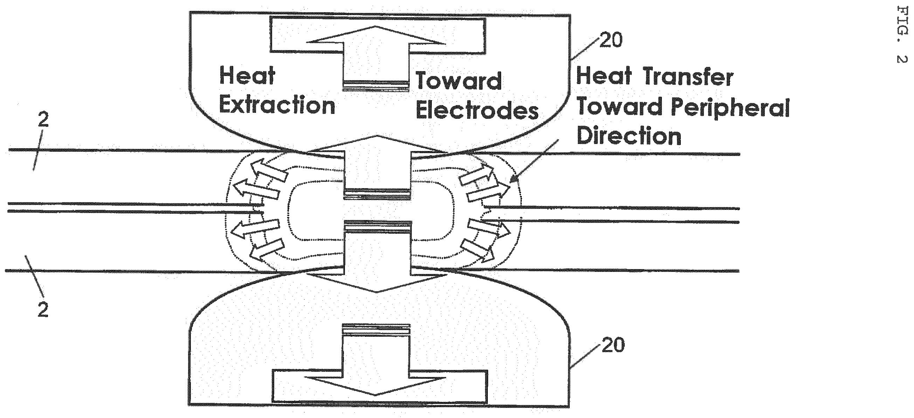

FIG. 2 schematically shows the cooling mechanism of the steel sheets 2 in the cooling period in the third step. As shown in FIG. 2, it is preferable that the paired electrodes holding the concave region is water-cooled to efficiently cool the weld nugget from the central portion to the edge portion. If the cooling period in the third step is long, the central portion of the weld nugget is cooled to be the temperature below Ms-temperature quenching treats the spot weld zone to transform the microstructure at the spot weld zone from the austenite to the martensite.

Fourth step: The fourth step applies the high-frequency electrical current across the paired electrodes holding the spot welded steel sheets after finishing the cooling period of the third step described above as "the third electrical current application" shown in FIG. 1. "The third electrical current application" is preferable to elevate temperature of the steel sheets to a temperature equal to or lower than the $A_{c1}$ transformation temperature by applying the high-frequency electrical current of 1-kHz to 50-kHz for 0.3 seconds to 1.0 second across the paired electrodes while holding the steel sheets under pressure. The time for electrical current application of the high-frequency electrical current of 0.3 seconds to 1.0 second enhances the strength of the spot weld zone because the corona bond is sufficiently elevated a temperature and tempering treated with a high production efficiency. After finishing the third electrical current application, the paired electrodes is made free from pressing. "The third electrical current application" forms a ring-shape heat accumulation region (hereinafter referred to as "the heat accumulation ring") in the outer peripheral portion of the weld nugget, and the heat transferred from the heat accumulation ring tempering treats the weld nugget that is surrounded by the heat affected zone (HAZ) and the heat accumulation ring.

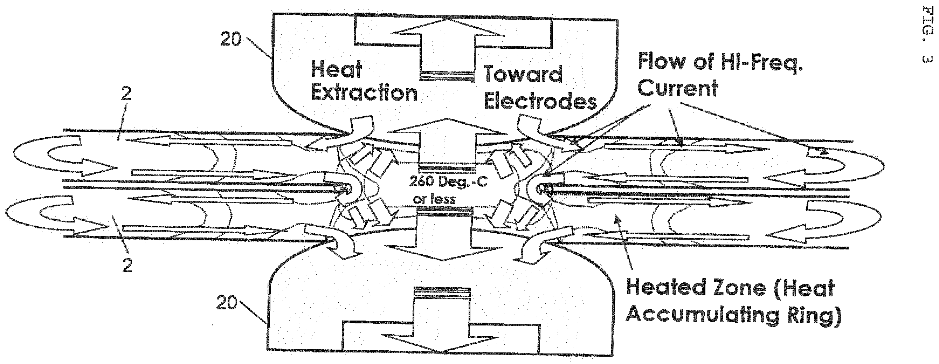

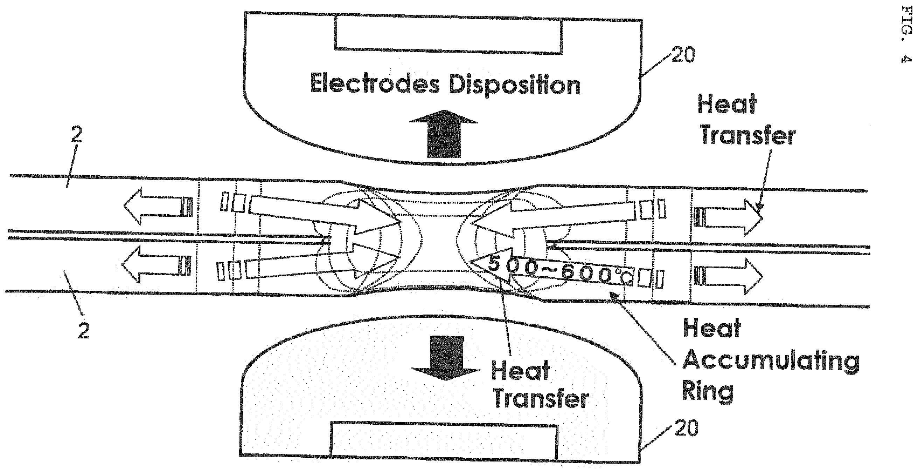

The heating mechanism of the steel sheets in "the third electrical current application" and the tempering mechanism after "the third electrical current application" will be described with reference to FIGs. 3 and 4. FIG. 3 is a diagram schematically illustrating the heating mechanism of the steel sheets in "the third electrical current application", and FIG. 4 is a diagram schematically illustrating the tempering mechanism after finishing "the third electrical current application". Although the low-frequency electrical current in "the first electrical current application" and "the second electrical current application" described above path through between the contact areas of the paired electrodes, the high-frequency electrical current in "the third electrical current application" flows through mainly surface layer of the steel sheet around outside of the paired electrodes due to the skin effect as shown in FIG. 3. Then, the heat accumulation ring locally elevated a temperature is formed in the portion high in the magnetic flux density of the high-frequency electrical current. After finishing "the third electrical current application", the paired electrodes 20 is detached from the steel sheets 2, the steel sheets spot welded are made free from the pressure. With detachment of the paired electrodes 20, heat transfers from the heat accumulation ring formed in the outer peripheral portion of the weld nugget into the low temperature region at the central portion in the weld nugget, and the entire region has been sandwiched with the paired electrode 20 under pressure is uniformly elevated temperature to 500 deg.-C to 600 deg.-C. The microstructure of the weld nugget is tempered by the heat transferred and transforms into the martensite excellent in the ductility and the toughness. In other words, the quenched spot weld zone in the weld nugget is tempering treated by the heat transferred from the heat accumulation ring.

As described above, the high-frequency electrical current in the fourth step applied into the steel sheets spot welded does not flow in the direction along the axis of the rod-like paired electrodes 20 the same as in the step 2, but flows around outside of the paired electrodes due to the skin effect. So, heat transfers from the heat accumulation ring accumulating heat in a ring-shape into the low temperature region at the center of the weld nugget. As a result, the entire region where the paired electrodes sandwich is uniformly heated. In addition, heat transfers from the heat accumulation ring toward the outside of the weld nugget also. Thus, the heat affected zone which is the periphery of the weld nugget is also tempering treated, and the microstructure in periphery of the weld nugget transforms into the martensite excellent in ductility and toughness. In general, the corona bond formed in the heat affected zone at the outer periphery of the weld nugget tends to be a fracture origin. However, the tempering treatment by the high-frequency electrical current application makes a hardness at the weld nugget 150% or less of the hardness of the heat treated steel sheets, and same time, makes a hardness at a heat affected zone at the outer periphery of the weld nugget 30% to 90% of the hardness at the weld nugget before the tempering treatment by the high-frequency electrical current application. So, fracture hardly occur in the spot weld zone and at the boundary region between the spot weld zone and the non-welded zone.

The diameter of the weld nugget NR (mm) formed in the steps 2 to 4 satisfies the conditional expression (1).

$$3\sqrt{t} \leqq NR \cdot \cdot \cdot (1)$$

where, t is the average thickness of the heat treated steel sheets

If the diameter of the weld nugget NR is bigger than 3 times square root of [t], the welding zone has advantage hardly fluctuate. Note that the upper limit of the diameter of the weld nugget NR does not exist. However, 6 times square root of [t] is preferable to be the upper limit in consideration of the practical use.

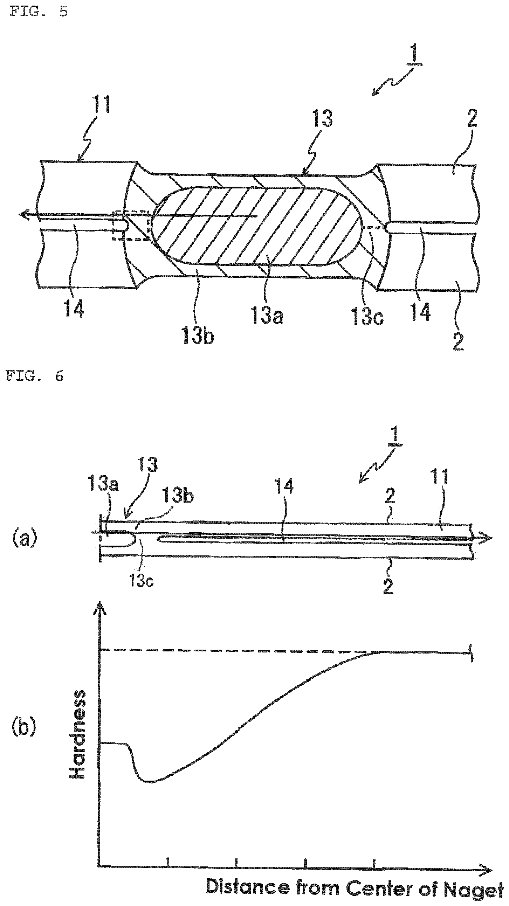

The cruciform test piece spot welded a cross center of the two steel sheets by the welding method described above for CTS test will be described with reference to FIG. 5. FIG. 5 schematically shows the cross section of a cruciform test piece prepared by the welding condition described above. The cruciform test piece 1 is provided with a spot weld zone 13 and a non-weld zone 11 as shown in FIG. 5. The non-weld zone 11 maintains the microstructure of the heat treated steel sheets 2 formed in the first step. The spot weld zone 13 is provided with a weld nugget 13a, the heat affected zone 13b at the outer periphery of the weld nugget 13a, and the corona bond 13c formed in the heat affected zone 13b. The gap 14 exists at the boundary between the steel sheets 2 and 2 in the heat affected zone 13b.

The hardness distribution in the cruciform test piece 1 will be described with reference to FIG. 6. FIG. 6(a) is a diagram schematically showing the vertical cross section of a cruciform test piece extending from the center of the weld nugget to the end of the cruciform test piece, and FIG. 6(b) is a chart showing an example of the hardness distribution along the longitudinal direction of the cruciform test piece in FIG. 6(a). Arrows in FIG. 6(a) corresponds to the positions where the hardness in FIG. 6(b) was measured. In the cruciform test piece 1, the hardness at the weld nugget 13a is higher than the hardness at the heat affected zone 13b at the outer periphery of the weld nugget 13a, and is lower than the hardness at the non-weld zone 11 apart from the weld nugget 13a, namely, the hardness of the heat treated steel sheets 2 before welding. The broken line in FIG. 6(b) denotes the hardness of the steel sheet before welding, and the hardness at the heat affected zone 13b is 150 % or less of the hardness at the weld nugget 13a.

The hardness distribution in the cruciform test piece 1 depends on the microstructure distribution caused by the heat cycle, and the distribution of the hardness among the spot weld zone and the region other than the spot weld zone depends on the amount of the heat energy generated by the high-frequency electrical current application. The microstructure of the portion cooled in the third step to a temperature lower than the Ms-temperature is transformed into the martensite microstructure by the tempering treatment.

[Examples]

[Example 1]

The steel sheet specimens for the welding test was prepared as described below. As the raw material, the carbon steer S45C was used. The chemical composition, the DI value, the carbon equivalent $C_{eq}$ and the tensile strength of the steel sheet specimens for the welding test of the carbon steel are shown in Table 1. Note that, the DI value is the ideal critical diameter: a value obtained in accordance with A255 (Standard Test Method for Determining Hardenability of Steel) provided in ASTM (American Society for Testing and Materials) in the present Example. The carbon equivalent $C_{eq}$ is the carbon equivalent provided in JIS A 5523. The expression for determination of the carbon equivalent is shown below.

$$C_{eq}\ (\%)\ =\ C\ +\ Si/24\ +\ Mn/6\ +\ Ni/40\ +\ Cr/5\ +\ Mo/4\ +\ V/14$$

[Table 1]

| Raw Material | Chemical composition (mass %) | | | | | DI value (mm) | Carbon equivalent $C_{eq}$ (%) | Tensile strength (GPa) |
|---|---|---|---|---|---|---|---|---|
| | C | Si | Mn | P | S | | | |
| S45C | 0.46 | 0.22 | 0.71 | 0.009 | 0.004 | 22.3 | 0.60 | 0.77 |

The test specimens prepared in Example were the steel sheets rectangular in the plain view, 150 mm in the length along the rolling direction, 50 mm in the width perpendicular to the rolling direction and 1.2 mm in thickness.

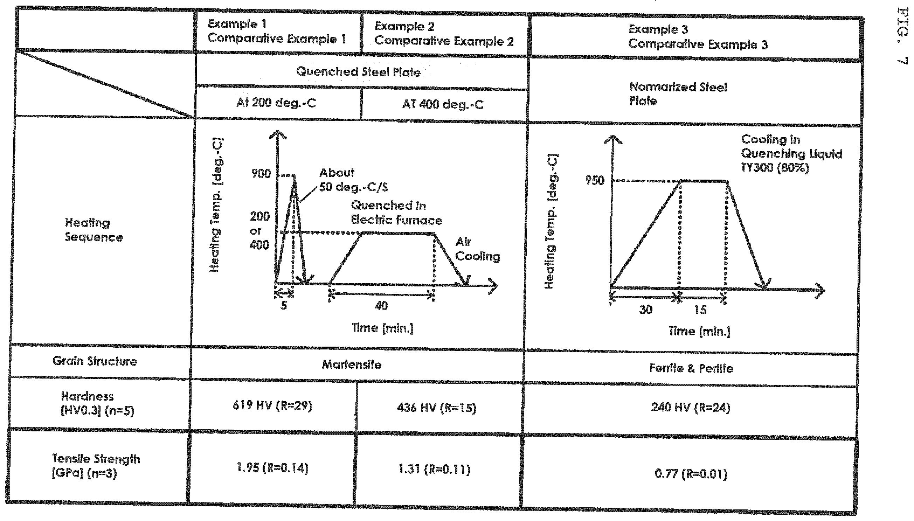

Then, the steel sheet specimens prepared were subjected to the heat treatment as the pretreatment step of the spot welding. FIG. 7 shows the heat cycle in the heat treatment of the steel sheet specimens, the microstructure, the hardness and the tensile strength of the steel sheet specimens in Examples 1 to 3 and Comparative Examples 1 to 3.

In Example 1, the steel sheet specimens were elevated temperature to 900 deg.-C in 5 minutes, and then quenching treated by rapid cooling at a rate of about 50 deg.-C /min as shown in FIG. 7. Then, the steel sheet specimens were heated at a constant temperature of 200 deg.-C for 40 minutes in an electric furnace, followed by air cooling for the tempering treatment.

In Example 1, the hardness and the tensile strength of the steel sheet specimen after the heat treatment are 619 HV and 1.95 GPa. The microstructure observed was martensite. In FIG. 7, [HV0.3] is the Vickers hardness (0.3 kgf), n is the number of the measured points and R is a range, the difference between the maximum value and the minimum value in the measured values.

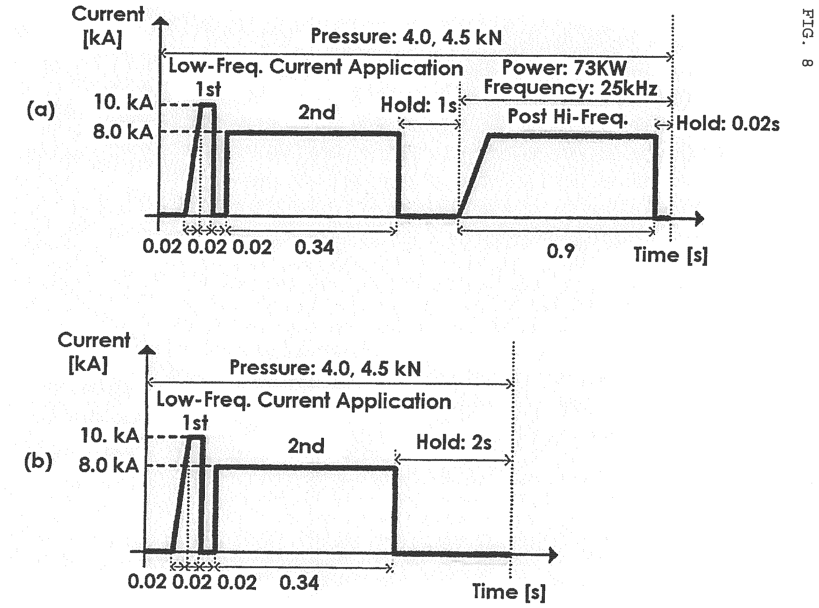

Then, two steel sheet specimens after finishing the pretreatment step were stacked and were subjected to spot welding. To conduct a cruciform tensile test in Example 1, two steel sheet specimen were stacked in a cross shape, sandwiched with rod-like water-cooled paired electrodes under a pressure of 4.5 kN. A spot welding followed by the tempering treatment was conducted with the electrical current application sequence shown in FIG. 8(a). The electrodes used are DR-type electrodes (DR40) having the diameter at the portion contact to the steel sheet of 6.0 mm. Specifically, a low-frequency electrical current of 50-Hz increased from 0 A to 10 kA in 0.02 seconds was applied for 0.02 seconds as the first electrical current application. Then, after the delay time of 0.02 seconds, a constant electrical current of 8 kA was applied for 0.34 seconds as the second electrical current application. After the delay time of 1.0 second, the high-frequency electrical current of 25-kHz and power of 73 kW was applied to the paired electrodes, and the electrical current application was turned off after 0.9 seconds of the high-frequency electrical current application as the third electrical current application. Then, while the condition was being maintained as it was for 0.02 seconds, the pressure of 4.5 kN to the paired electrodes was released, and the paired electrodes were detached. Thus, the cruciform test piece in Example 1 was prepared. For evaluation, CTS test was conducted to investigate the fracture load and the fracture mode. The diameter NR of the weld nugget of the cruciform test piece prepared in Example 1 is 6.0 mm. As the thickness of the steel sheet specimen in Example 1 is 1.2 mm, the diameter of the weld nugget is equivalent to 5.48 times square root of [t].

[Example 2]

In Example 2, the steel sheet specimens the same as in Example 1 were used. Example 2 is different from Example 1 in the tempering temperature using electric furnace in the heat cycle, a constant tempering temperature of 400 deg.-C was employed as shown in FIG. 7. In Example 2, the hardness and the tensile strength of the heat treated steel sheet specimen were 436 HV and 1.31 GPa. The microstructure observed was martensite. Two heat treated steel sheet specimens were subjected to spot welding under the same conditions as in Example 1 to prepare a cruciform test piece. Note that, the pressure with the paired electrodes was 4.0 kN. The diameter NR of the weld nugget of the cruciform test piece prepared in Example 2 is 5.9 mm. As the thickness of the steel sheet specimen in Example 2 is 1.2 mm, the diameter of the weld nugget is equivalent to 5.39 times square root of [t]. Then, the spot welding strength of the cruciform test piece prepared in Example 2 was measured in the same manner as in Example 1.

[Example 3]

In Example 3, the steel sheet specimens the same as in Examples 1 were used. In the heat treatment of Example 3, a normalizing treatment different from Examples 1 and 2 was conducted. In Example 3, the steel sheet specimens were elevated temperature linearly to 900 deg.-C in about 30 minutes, were maintained at 900 deg.-C for 15 minutes, and then were immersed into a quenching liquid in tank under stirring as shown in FIG. 7.

As shown in FIG. 7, the hardness and the tensile strength of the steel sheet specimens after the heat treatment were 240 HV and 0.77 GPa in Example 3. The microstructure observed is a dual-phase microstructure composed of ferrite and perlite. Two heat treated steel sheet specimens were subjected to spot welding under the same conditions as in Example 1 to prepare a cruciform test piece. Note that, the pressure with the paired electrodes was 4.0 kN. The diameter NR of the weld nugget of the cruciform test piece prepared in Example 3 is 6.1 mm. As the thickness of the steel sheet specimen in Example 3 is 1.2 mm, the diameter of the weld nugget is equivalent to 5.57 times square root of [t]. Then, the spot welding strength of the cruciform test piece prepared in Example 3 was measured in the same manner as in Example 1.

[Example 4]

Example 4 is different from Example 3 only in the electrical power in the high-frequency electrical current application. Specifically, the electrical power in the high-frequency electrical current application was 38.7 kW-s in Example 4.

[Example 5]

Example 5 is different from Example 3 only in the electrical power in the high-frequency electrical current application. Specifically, the electrical power in the high-frequency electrical current application was 30.1 kW-s in Example 5.

[Example 6]

In Example 6, the steel sheet specimens S45C the same as in Example 1 rectangular in the plain view, 460 mm in the length along the rolling direction, 50 mm in the width perpendicular to the rolling direction and 1.6 mm in thickness.

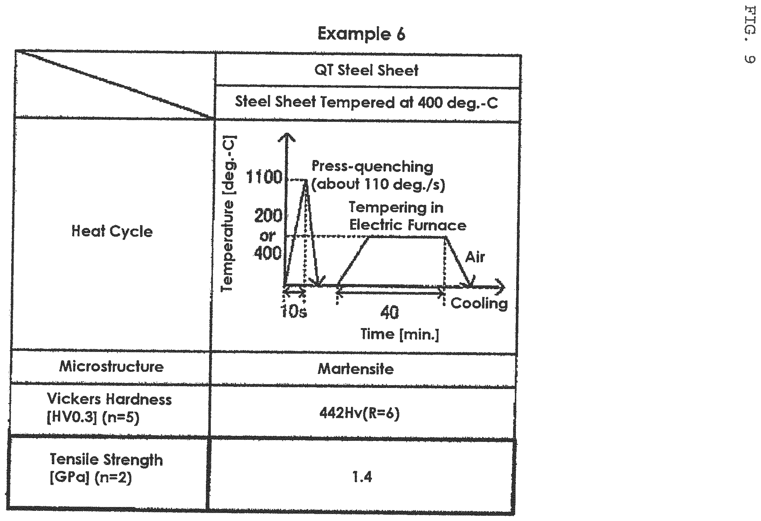

In Example 6, a tempering treatment was conducted in the heat treatment as the pre-treatment of the steel sheet specimen. FIG. 9 shows the heat cycle of the heat treatment on the steel plate specimen, the microstructure, the hardness and the tensile strength of the steel sheet specimen after the heat treatment.

In Example 6, the steel sheet specimens were elevated temperature to 1100 deg.-C in 10 minutes, and then quenching treated by rapid cooling at a rate of about 110 deg.-C /min as shown in FIG. 9. Then, the steel sheet specimens were heated at a constant temperature of 400 deg.-C for 40 minutes in an electric furnace, followed by air cooling for the tempering treatment. In Example 6, the hardness and the tensile strength of the steel sheet specimen after the heat treatment are 442 HV and 1.40 GPa. The microstructure of the heat treated steel sheet specimen is martensite.

Then, two heat treated steel sheet specimens were stacked in a cross shape and spot welded to prepare the cruciform test piece in Example 6 to conduct CTS test the same as in Example 1. The spot welding in Example 6 is the same as in Example 1 except the pressure was 4.0 kN and the second electrical current application was 5.2 kA. The diameter NR of the weld nugget of the cruciform test piece prepared in Example 6 is 3.8 mm. As the thickness of the steel sheet specimen in Example 6 is 1.6 mm, the diameter of the weld nugget is equivalent to 3.00 times square root of [t]. Then, the spot welding strength of the cruciform test piece prepared in Example 6 was measured in the same manner as in Example 1.

[Example 7]

In Example 7, the cruciform test piece for CTS test was prepared by spot welding the two steel sheet specimens in the same manner as in Example 6. The spot welding was the same as in Example 6 except the second electrical current application was 6.2 kA. The diameter NR of the weld nugget of the cruciform test piece prepared in Example 6 is 5.1 mm. As the thickness of the steel sheet specimen in Example 6 is 1.6 mm, the diameter of the weld nugget is equivalent to 4.03 times square root of [t]. Then, the spot welding strength of the cruciform test piece prepared in Example 7 was measured in the same manner as in Example 1.

[Example 8]

In Example 8, the cruciform test piece for CTS test was prepared by spot welding the two steel sheet specimens in the same manner as in Example 6. The spot welding was the same as in Example 6 except the second electrical current application was 7.8 kA. The diameter NR of the weld nugget of the cruciform test piece prepared in Example 6 is 6.7 mm. As the thickness of the steel sheet specimen in Example 6 is 1.6 mm, the diameter of the weld nugget is equivalent to 5.30 times square root of [t]. Then, the spot welding strength of the cruciform test piece prepared in Example 8 was measured in the same manner as in Example 1.

[Other Examples]

Although, S45C was used as the raw material in preparation of the steel sheet specimens for the welding test of the carbon steel in Examples 1 to 8, steel sheet specimens using other raw materials, S15C in Example 9, S25C in Example 10, S35C in Example 11 and S55C in Example 12 were prepared also. Table 2 shows the chemical composition, the DI value, the carbon equivalent $C_{eq}$ before the heat treatment and the tensile strength after the heat treatment of the steel sheet specimens.

[Table 2]

| Raw Material | Chemical composition (mass %) | | | | | DI value (mm) | Carbon equivalent $C_{eq}$ (%) | Tensile strength (GPa) |
|---|---|---|---|---|---|---|---|---|
| | C | Si | Mn | P | S | | | |
| S15C | 0.15 | 0.26 | 0.43 | 0.008 | 0.010 | 8.6 | 0.23 | 0.46 |
| S25C | 0.26 | 0.26 | 0.43 | 0.009 | 0.011 | 11.3 | 0.34 | 0.52 |
| S35C | 0.35 | 0.25 | 0.75 | 0.009 | 0.010 | 18.6 | 0.49 | 0.61 |
| S55C | 0.55 | 0.25 | 0.75 | 0.008 | 0.011 | 23.3 | 0.69 | 0.83 |

The steel sheet specimens in Examples 9 to 12 prepared by using the raw materials described above were subjected to a normalizing treatment in the same manner as in Example 3. Then, the steel sheet specimens were stacked in a cross shape and subjected to spot welding, followed by conducting the tempering treatment by the high-frequency electrical current application. The pressure with the paired electrodes in the spot welding were 2.5 kN in Example 9, 3.0 kN in Example 10 and 4.0 kN in Examples 11 and 10. The first electrical current applications in the spot welding were conducted with 10.0 A in any of Examples 9 to 12. The second electrical current application conducted in the spot welding were 8.5 A in Example 11, and 8.0 A in Examples 9, 10 and 12. The spot welding conditions other than the conditions described above were the same as in Example 3 in preparation of the cruciform test piece and the spot welding strength was measured under the same manner as in Example 1. The electrical powers in the tempering treatment by the high-frequency electrical current application were 21.5 kW-s in Example 9, 30.1 kW-s in Example 10, 38.7 kW-s in Example 11 and 65.7 kW-s in Example 12. The application times of the electrical power in the high-frequency electrical current application were 0.5 to 0.9 seconds, and were regulated in consideration of the electrical power.

[Comparative Examples]

[Comparative Example 1]

In Comparative Example 1, two heat treated steel sheet specimens the same as in Example 1 were used. Then, the two heat treated steel sheet specimens were stacked in a cross shape and were sandwiched with rod-like water-cooled paired electrodes under a pressure of 4.5 kN. Then, a low-frequency electrical current application of 50-Hz was increased from 0 A to 10 kA in 0.02 seconds, and then a constant electrical current of 10 kA was applied for 0.02 seconds as shown in FIG. 8(b) . After the delay time of 0.02 seconds, a constant electrical current of 8 kA was applied for 0.34 seconds. Then, while the pressure was being maintained as it was for 2.0 seconds, the pressure of 4.5 kN with the paired electrodes was released, and the paired electrodes were detached and the cruciform test piece in Comparative Example was prepared. The diameter NR of the weld nugget of the cruciform test piece prepared in Comparative Example 1 is 6.0 mm. As the thickness of the steel sheet specimen in Comparative Example 1 is 1.2 mm, the diameter of the weld nugget is equivalent to 5.48 times square root of [t]. Then, the spot welding strength of the cruciform test piece prepared in Comparative Example 1 was measured in the same manner as in Example 1.

[Comparative Example 2]

In Comparative Example 2, two heat treated steel sheet specimens the same as in Example 2 were used. Then, a cruciform test piece was prepared in the same manner as in Comparative Example 1. The diameter NR of the weld nugget of the cruciform test piece prepared in Comparative Example 2 is 6.0 mm. As the thickness of the steel sheet specimen in Comparative Example 2 is 1.2 mm, the diameter of the weld nugget is equivalent to 5.48 times square root of [t]. Then, the spot welding strength of the cruciform test piece prepared in Comparative Example 2 was measured in the same manner as in Example 1.

[Comparative Example 3]

In Comparative Example 3, two heat treated steel sheet specimens the same as in Example 3 were used. Then, a cruciform test piece was prepared in the same manner as in Comparative Examples 1 and 2. The diameter NR of the weld nugget of the cruciform test piece prepared in Comparative Example 3 is 6.0 mm. As the thickness of the steel sheet specimen in Comparative Example 3 is 1.2 mm, the diameter of the weld nugget is equivalent to 5.48 times square root of [t]. Then, the spot welding strength of the cruciform test piece prepared in Comparative Example 3 was measured in the same manner as in Example 1.

[Comparative Example 4]

In Comparative Example 4, two heat treated steel sheet the same as in Example 6 were used. The cruciform test piece was prepared by conducting the spot welding with the same condition as in Comparative Example 1 except the pressure was 4.0 kN and the second electrical current application of 5.2 kA. The diameter NR of the weld nugget of the cruciform test piece prepared in Comparative Example 4 is 3.8 mm. As the thickness of the steel sheet specimen in Comparative Example 4 is 1.6 mm, the diameter of the weld nugget is equivalent to 3.00 times square root of [t]. Then, the spot welding strength of the cruciform test piece prepared in Comparative Example 4 was measured in the same manner as in Example 1.

[Comparative Example 5]

In Comparative Example 5, two heat treated steel sheet the same as in Example 6 were used. The cruciform test piece was prepared by conducting the spot welding with the same condition as in Comparative Example 1 except the pressure was 4.0 kN and the second electrical current application of 6.2 kA. The diameter NR of the weld nugget of the cruciform test piece prepared in Comparative Example 5 is 5.1 mm. As the thickness of the steel sheet specimen in Comparative Example 5 is 1.6 mm, the diameter of the weld nugget is equivalent to 4.03 times square root of [t]. Then, the spot welding strength of the cruciform test piece prepared in Comparative Example 5 was measured in the same manner as in Example 1.

[Comparative Example 6]

In Comparative Example 6, two heat treated steel sheet the same as in Example 6 were used. The cruciform test piece was prepared by conducting the spot welding with the same condition as in Comparative Example 1 except the pressure was 4.0 kN and the second electrical current application of 7.8 kA. The diameter NR of the weld nugget of the cruciform test piece prepared in Comparative Example 6 is 6.7 mm. As the thickness of the steel sheet specimen in Comparative Example 6 is 1.6 mm, the diameter of the weld nugget is equivalent to 5.30 times square root of [t]. Then, the spot welding strength of the cruciform test piece prepared in Comparative Example 6 was measured in the same manner as in Example 1.

(Comparison among Examples 1 to 3 and Comparative Examples 1 to 3)

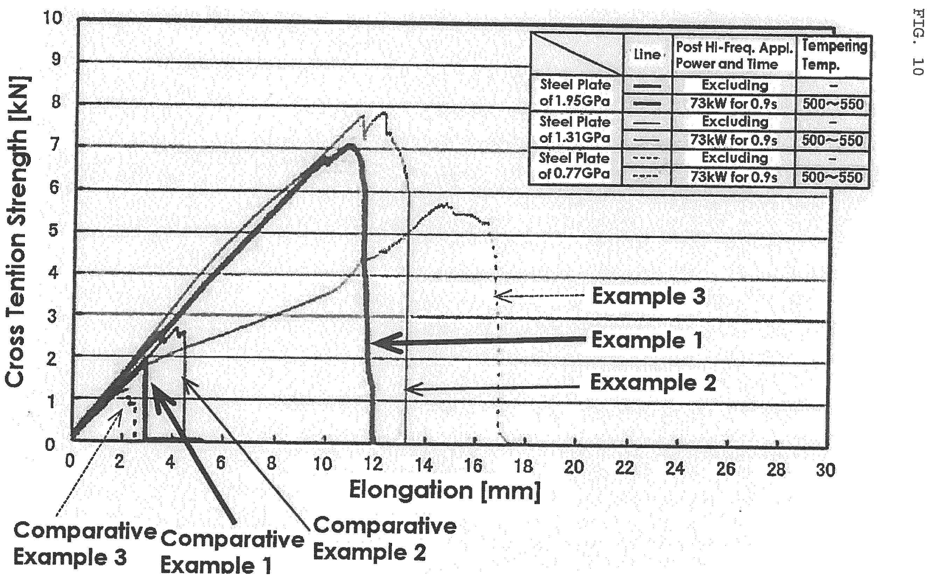

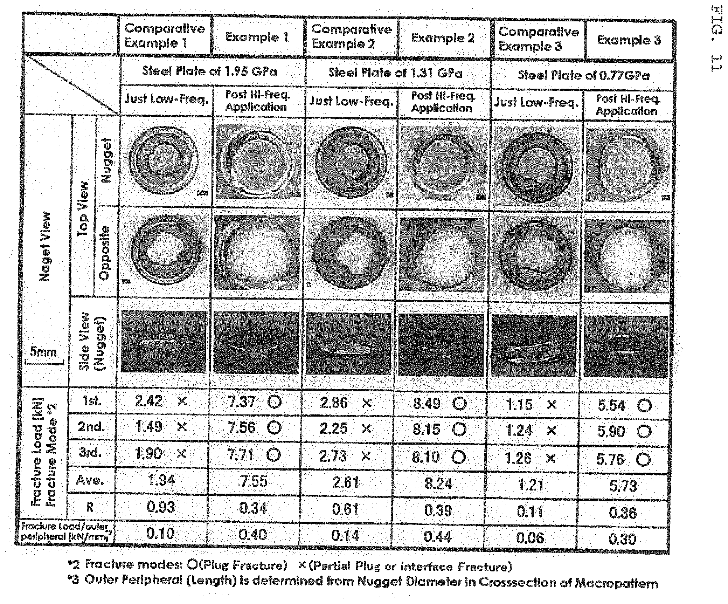

The evaluation results of Examples 1 to 3 and Comparative Examples 1 to 3 will be described. FIG. 10 shows the load-stroke curves in the measurement of the CTS. In FIG. 10, the X-axis represents the stroke (mm), and the Y-axis represents the cross tension strength (kN). FIG. 11 shows the cross tension strengths determined from the curves shown in FIG. 10. FIG. 11 also shows the observed photo image at the weld nuggets in the cruciform test piece prepared after CTS measurement in Examples 1 to 3 and Comparative Examples 1 to 3.

As shown in FIG. 11, the average value of the cross tension strengths in the cruciform test piece prepared is 7.55 kN in Example 1, 8.24 kN in Example 2, and 5.73 kN in Example 3. The average value of the cross tension strength in the cruciform test piece prepared is 1.94 kN in Comparative Example 1, 2.61 kN in Comparative Example 2 and 1.21 kN in Comparative Example 3. That is, the average value of the cross tension strength in the cruciform test piece prepared in Examples are three times to five times of the average value of the cross tension strength in Comparative Examples. Also, from the observed photo image at the weld nuggets, the fracture modes in Examples 1 to 3 are all plug failure, but the fracture modes in Comparative Examples 1 to 3 are partial plug failure or interface fracture.

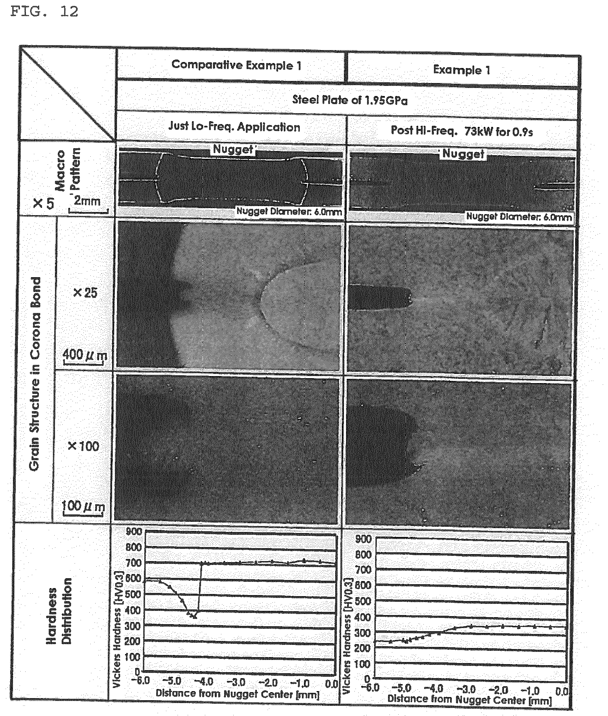

FIGs. 12 to 14 show the observed photo images of microstructure at the macro patterns and the corona bonds, and the charts show the hardness distributions. As is obvious in the observed photo images of microstructure at the macro patterns and of the corona bonds in FIGs. 12 to 14, the boundaries between the weld nugget and the heat affected zone are clearly observed in Comparative Examples 1 to 3. However, the boundaries between the weld nugget and the heat affected zone are not clear in Examples 1 to 3.

If the hardness distributions in Comparative Examples 1 and 2 are investigated in the lengthwise direction of the cruciform test piece at a position about 0.1 mm far from the spot weld central axis of the two steel sheet specimens, the hardness at the weld nugget is different from the hardness at the heat affected zone. The hardness at the portions not conducted both the spot welding and the tempering treatment by the high-frequency heating are about 600 HV in Comparative Example 1 and 430 HV in Comparative Example 2. In contrast, the hardness at the portions conducted the spot welding (the weld nuggets) in Comparative Examples 1 and 2 are both about 700 HV or more and almost constant. However, the HAZ softened layers decreased in hardness exist in the boundary regions between the welded portion and the portion not affected by welding.

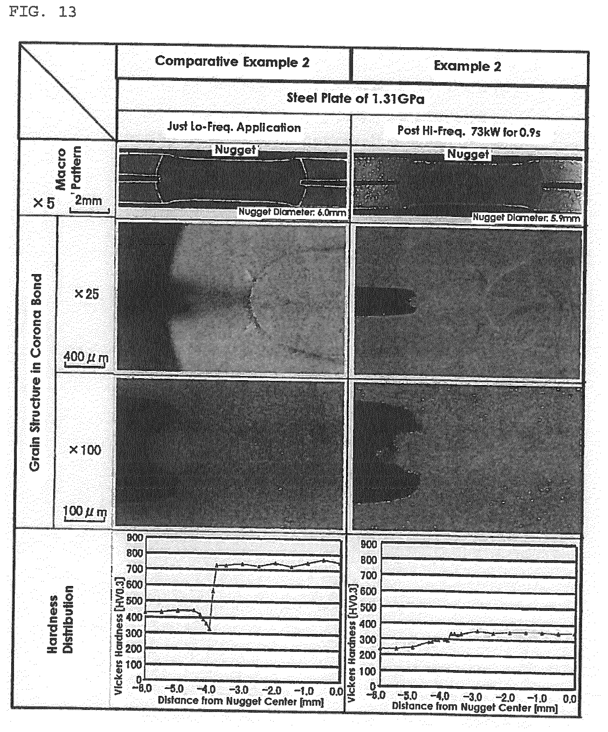

On the other hand, in the cruciform test piece prepared in Example 1 in which the heat treated steel sheet specimens are spot welded followed by the tempering treatment by the high-frequency electrical current application, the hardness at the weld nugget 13a of the spot weld zone 13 is about 360 HV as indicated by a solid line in FIG. 12. The hardness at the weld nugget after the tempering treatment by the high-frequency electrical current application is about 70% of the hardness 619 HV, hardness of the heat treated steel sheet specimens before the spot welding. In the cruciform test piece prepared in Example 2 in which the heat treated steel sheet specimens are spot welded followed by the tempering treatment by the high-frequency electrical current application, the hardness at the weld nugget 13a of the spot weld zone 13 is about 350 HV as indicated by a solid line in FIG. 13. The hardness at the weld nugget after the tempering treatment by the high-frequency electrical current application is about 97% of the hardness 436 HV, hardness of the heat treated steel sheet specimen before the spot welding. In Examples 1 and 2, the hardness at the weld nugget 13a of the spot weld zone 13 are lower than the hardness of the heat treated steel sheet specimen.

The hardness at the heat affected zone 13b at the outer periphery of the weld nugget 13a is about 280 HV to 350 HV in Example 1. In Comparative Example 1 in which the same conditions as in Example 1 except the tempering treatment by the high-frequency electrical current application was employed, i.e. the tempering treatment was conducted only by low-frequency electrical current application in the spot welding, the hardness at the weld nugget 13a is about 700 HV as shown in Dig. 12. So, the hardness at the heat affected zone 13b in Example 1 is 40% to 50% of the hardness at the weld nugget 13a in Comparative Example 1 in which the tempering treatment by the high-frequency electrical current application was not conducted. The hardness at the heat affected zone 13b at the outer periphery of the weld nugget 13a in Example 2 is about 280 HV to 350 HV. In Comparative Example 2 in which the same conditions as in Example 2 except the tempering treatment by the high-frequency electrical current application was employed, i.e. the tempering treatment was conducted only by low-frequency electrical current application in the spot welding, the hardness at the weld nugget 13a is around 750 HV as shown in FIG. 13. So, the hardness at the heat affected zone 13b in Example 2 is 37% to 47% of the hardness at the weld nugget 13a in Comparative Example 2 in which the tempering treatment by the high-frequency electrical current application was not conducted.

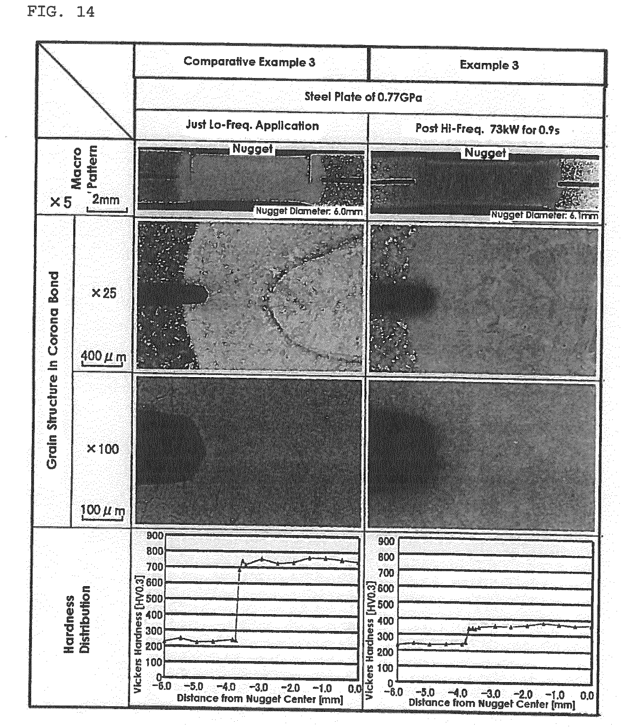

On the other hand, in Example 3 in which the steel sheet specimens heat treated by normalizing treatment was spot welded followed by the tempering treatment by the high-frequency electrical current application, the hardness at the weld nugget 13a of the spot weld zone 13 is about 350 HV as indicated by a solid line in FIG. 14. The hardness at the weld nugget after the tempering treatment by the high-frequency electrical current application in Example 3 is about 146% of the hardness 240 HV of the heat treated steel sheet specimen before the spot welding. The hardness at the heat affected zone 13b at the outer periphery of the weld nugget 13a in Example 3 is about 240 HV to 350 HV. In Comparative Example 3 in which the same conditions as in Example 3 except the tempering treatment by the high-frequency electrical current application was employed, i.e. the tempering treatment was conducted only by low-frequency electrical current application in the spot welding, the hardness at the weld nugget 13a is around 730 HV as shown in FIG. 14. So, the hardness at the heat affected zone 13b in Example 3 is 33% to 48% of the hardness at the weld nugget 13a in Comparative Example 3 in which the tempering treatment by the high-frequency electrical current application was not conducted.

In comparison among Examples 1 to 3 and Comparative Examples 1 to 3, the matter is made obvious that the welding method according to the present invention recovers the ductility and the toughness and makes the spot weld zone hardly fracture because the steel sheets relatively high in carbon proportion are heat treated and are conducted the spot welding and then tempering treated.

(Comparison among Examples 3 to 5 and Comparative Example 3)

In comparison between Example 3 and Comparative Example 3, the matter is made obvious that the tempering treatment by the high-frequency electrical current application increases the CTS and achieves plug failure in the cruciform tensile test. Then, the cross tension strength in relation to the electrical power in the high-frequency electrical current application will be investigated with reference to Examples 3 to 5 and Comparative Example 3. The cross tension strengths were determined from the load-stroke curves in Example 3 to 5 and Comparative Example 3 in the same manner as determined in FIG. 10. The average value of the cross tension strengths in Example 4 is 5.7 kN, and the average value of the cross tension strengths in Example 5 is 5.4 kN. So, the matter is made obvious that the decrease of the electrical power from 65.7 kW-s to 38.7 kW-s or 30.1 kW-s changes the cross tension strength little, i.e. the high-frequency electrical current application low in electrical power achieves the tempering treatment. The observation of failed weld nuggets shows that the fracture modes in Examples 4 and 5 are plug failure.

(Comparison among Examples 6 to 8 and Comparative Examples 4 to 6)

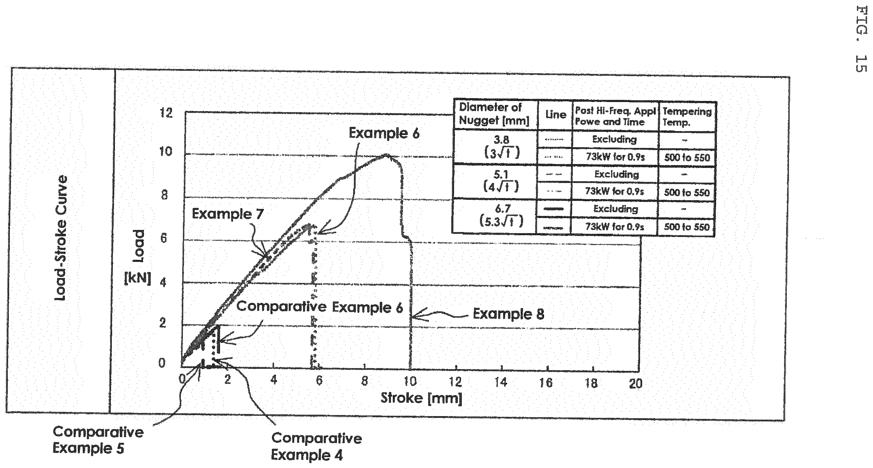

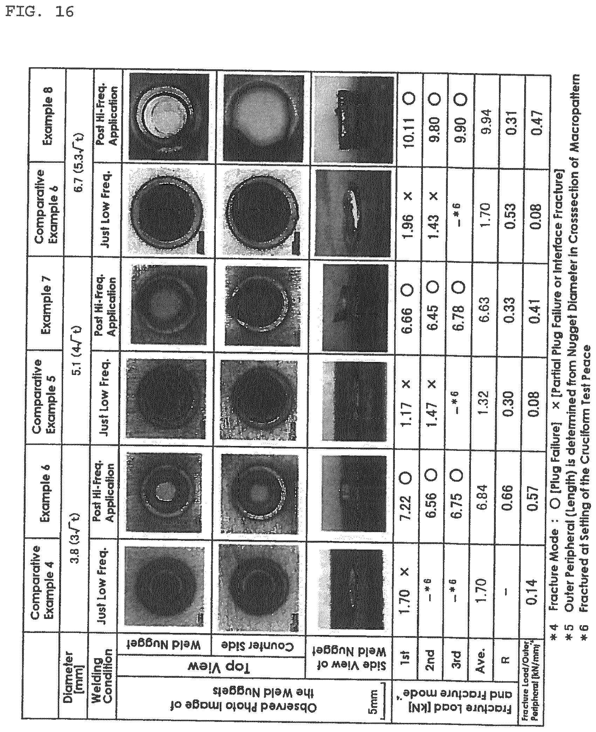

The evaluation results in Examples 6 to 8 and Comparative Examples 4 to 6 will be described. In FIG. 15, X-axis is a stroke (mm) and Y-axis is a load (kN). Fracture loads determined from FIG. 15 are shown in FIG. 16. Further, FIG. 16 also shows the observed photo image at the weld nuggets in the cruciform test piece prepared after CTS measurement in Examples 6 to 8 and Comparative Examples 4 to 6. Further, FIG. 16 shows a diagram showing relationship between CTS and the diameter of the weld nugget.

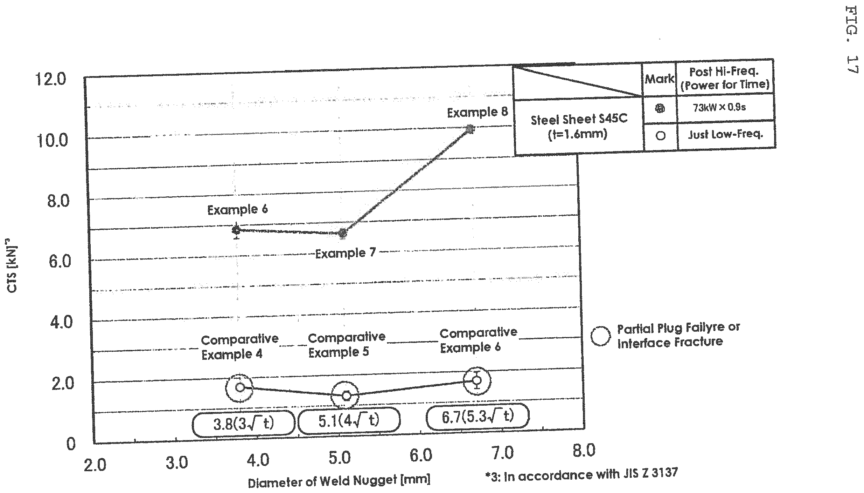

As shown in FIGs. 16 and 17, the average fracture load of the cruciform test pieces are 6.84 kN in Examples 6, 6.63 kN in Example 7 and 9.94 kN in Example 8. In contrast, the average fracture load of the cruciform test pieces are 1.70 kN in Comparative Examples 4 corresponding to Example 6, 1.32 kN in Comparative Example 5 corresponding to Example 7 and 1.70 kN in Comparative Example 6 corresponding to Example 8. That is, the average fracture loads in Examples are 4 times to 5.8 times of the average fracture loads in Comparative Examples. In view of the observed photo image at the weld nuggets, even the fracture mode in Examples 6 to 8 are the plug failure, the fracture mode in Comparative Examples are the partial plug failure or the interface fracture.

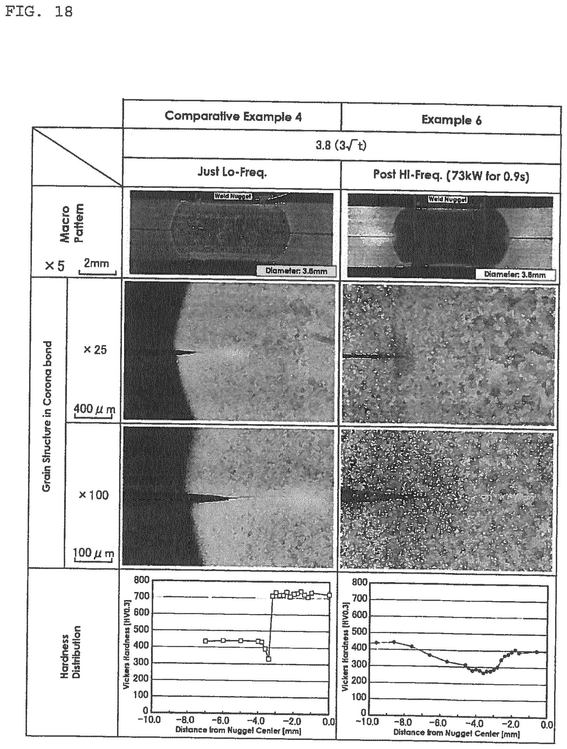

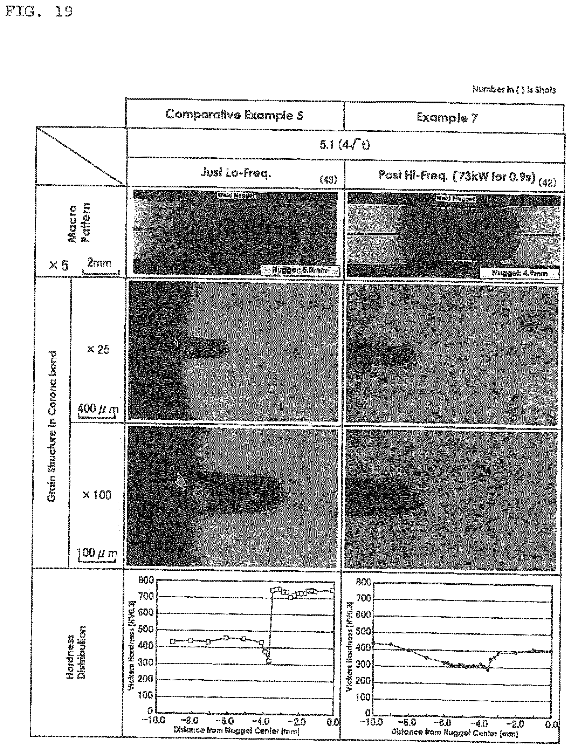

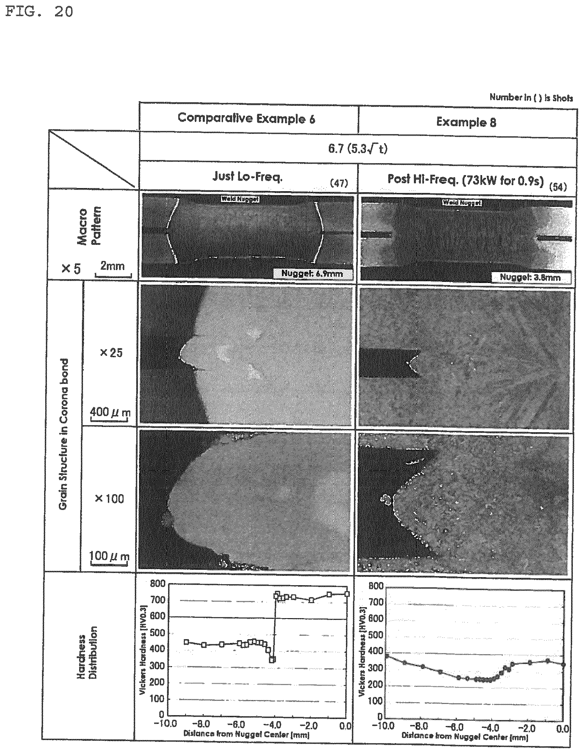

FIGs. 18 to 20 show the observed photo images of microstructure at the macro patterns and the corona bonds, and the charts show the hardness distributions. As is obvious in the observed photo images of microstructure at the macro patterns and of the corona bonds in FIGs. 18 to 20, the boundaries between the weld nugget and the heat affected zone are clearly observed in Comparative Examples 4 to 6. However, the boundaries between the weld nugget and the heat affected zone are not clear in Examples 6 to 8.

If the hardness distributions are investigated in the lengthwise direction of the cruciform test piece at a position 0.3 mm to 0.4 mm far from the spot weld central axis of the two steel sheet specimens, the hardness at the weld nugget is different from the hardness at the heat affected zone in Comparative Examples 4 to 6. The hardness at the portions not conducted both the spot welding and the tempering treatment by the high-frequency heating are about 420 HV to 450 HV in Comparative Examples 4 to 6 and the hardness at the portions conducted the spot welding (the weld nuggets) are about 700 HV or more and almost constant. However, the HAZ softened layers decreased in hardness exist in the boundary regions between the portion affected by the spot welding and the portion not affected by the spot welding.

On the other hand, in the cruciform test piece prepared in Examples 6 to 8 in which the heat treated steel sheet specimens are spot welded followed by the tempering treatment by the high-frequency electrical current application, the hardness at the weld nugget 13a of the spot weld zone 13 are about 350 HV to 400 HV as indicated by a solid line in FIGs. 18 to 20. Although the diameters of the weld nuggets in Examples 6 to 8 are different, the hardness at the weld nugget after the tempering treatment by the high-frequency electrical current application is almost the same as the hardness of the heat treated steel sheet specimens before the spot welding of 442 HV. The hardness at the weld nugget 13a in the weld zone 13 in Examples 6 to 8 are lower than the hardness of the heat treated steel sheet specimen.

The hardness at the heat affected zone 13b at the outer periphery of the weld nugget 13a is about 280 HV to 350 HV in Examples 6 to 8. So, the hardness at the heat affected zone 13b in Examples 6 to 8 are 25% to 50% of the hardness at the weld nugget 13a in Comparative Examples 4 to 6 in which the tempering treatment by the high-frequency electrical current application was not conducted.

In comparison among Examples 6 to 8 and Comparative Examples 4 to 6, the matter is made obvious that the welding method according to the present invention recovers the ductility and the toughness and makes the spot weld zone hardly fracture because the steel sheets relatively high in carbon proportion are heat treated and are conducted the spot welding and then tempering treated regardless of the weld nugget size.

(Evaluation Results in Examples 9 to 12)

In Examples 9 to 12, the hardness distribution was investigated in the same manner as in Examples 1 to 8. The partial tempering effect of the high-frequency electrical current application decreases the hardness at both the weld nugget and the corona bond as compared with the hardness at the non-welded portion: the heat treated steel sheet, in any of steel sheet specimens different in carbon content. The degree of the decrease increases as the electrical power of the high-frequency electrical current application increases, namely, as the electrical power and/or the electrical current application time increases.

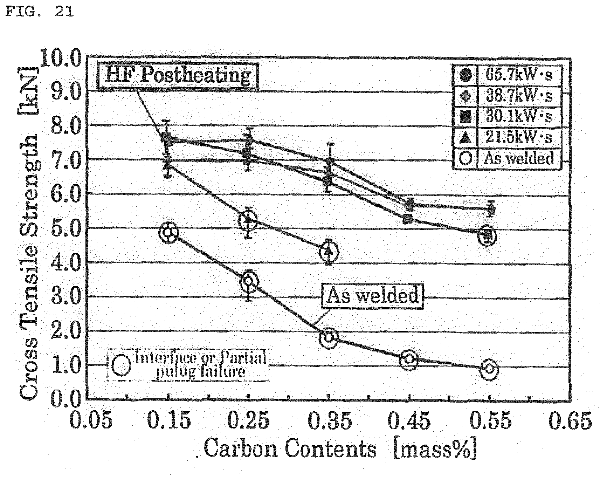

The dependence of the CTS upon carbon content against the electrical power by time in the high-frequency electrical current application as a parameter will be described with reference to FIG. 21. In FIG. 21, the X-axis represents the carbon content (mass %) and the Y-axis represents the CTS (kN). In FIG. 21, the solid black circle (●)denote to the electrical powers of the high-frequency electrical current application of 65.7 kW-s, the solid black rhombus (♦)denote to the electrical powers of the high-frequency electrical current application of 38.7 kW-s, the solid black square (■)denote to the electrical powers of the high-frequency electrical current application of 30.1 kW-s and the solid black triangle (▲) denote to the electrical powers of the high-frequency electrical current application of 21.5 kW-s. The open black circle (○) denotes the case without the tempering treatment by the high-frequency electrical current application. The plotted values are an average of the data measured on a plurality of prepared samples, and the vertical bars show the range. Note that, the plots surrounded by the open black circle represent the interface fracture or the partial plug failure in each of the plots.

If the tempering treatment by the high-frequency electrical current application is not conducted, the increase of the carbon content results significant decrease in the CTS from about 5 kN to about 1 kN as shown in FIG. 21. The fracture modes are not plug failure because either are the interface fracture or the partial plug failure.

However, if the tempering treatment is conducted by the high-frequency electrical current application, even if the carbon content is 0.20 mass % or more, namely, 0.26 mass %, 0.35 mass %, 0.46 mass %, and 0.55 mass %, these all being 0.25 mass % or more, the CTS should be 5.0 kN or more. Further, with the increased electrical power, plug failure within a sound weld nugget occurs.

As described above, if the tempering treatment by the high-frequency electrical current application is not conducted, the fracture strength significantly decreases at the carbon content of 0.35 mass %. In contrast, if the tempering treatment by the high-frequency electrical current application is conducted, the decrease in the fracture strength is relatively small even if the carbon content increases. Thus, in comparison between the case where the tempering treatment by the high-frequency electrical current application is conducted and the case where no tempering treatment by the high-frequency electrical current application is conducted, the fracture strength is only 1.5 to 2 times in the steel sheet having the carbon contents of 0.25 mass % or less, but the fracture strength is 3 to 5 times in the steel sheet having the carbon contents of 0.35 mass % or more.

So, the present invention increases the strengths of the cruciform test pieces using the carbon steels medium to high in carbon content, and up the level of the available strength of steel sheets high in tensile strength.

The embodiments of the present invention is not limited to the matters described above and may be appropriately modified within the scope as defined by the appended claims. The lower electrical power in the high-frequency electrical current application than the electrical powers in Examples may make practical manufacturing lines feasible.

Industrial applicability

The welding method according to the present invention recovers the ductility and the toughness in the spot weld zone to make the spot weld zone hardly fracture regardless of the carbon content. So, carbon steels medium to high in carbon content that have not been investigated as the members for spot welding are used as the members for spot welding.

[Symbol List]

1    Cruciform test piece
2    Steel sheet
11    Non-welded zone
13    Spot weld zone
13a    Portion melted and solidified (weld nugget)
13b    Heat affected zone (HAZ)
13c    Corona bond
14    Gap
20    Electrode

**Claims**

1.  A welding method for spot welding steel sheets (2) in a stack,
    wherein the steel sheets (2) are heat treated and spot welded and a spot weld zone (13) composed of a weld nugget (13a) and a heat affected zone (13b) is formed at the outer periphery of the weld nugget (13a),

wherein spot welded steel sheets (2) are tempering treated by applying a high-frequency electrical current on the spot weld zone (13), and

wherein the diameter of the weld nugget (13a) NR in mm satisfies the following conditional expression:

$$3 * \sqrt{t} \leq NR$$

where, t is the average thickness of the heat treated steel sheets in mm,

**characterized in that**:

a heat accumulation zone elevated in temperature is formed at the outer periphery of the weld nugget (13a) and a hardness at the weld nugget (13a) is made 150% or less of the hardness of the heat treated steel sheets (2) and a hardness at the heat affected zone (13b) is made 30% to 90% of the hardness at the weld nugget (13a) before the tempering treatment.

2. The welding method according to claim 1, wherein a tensile strength of the heat treated steel sheets (2) is 0.77 GPa or more and 2.0 GPa or less.

3. The welding method according to claim 1 or 2, wherein the heat treated steel sheets (2) are the quenching treated steel sheets (2) elevated a temperature equal to or higher than the transformation temperature and cooled rapidly or a normalizing treated steel sheets (2).

4. The welding method according to any one of claims 1 to 3, wherein a carbon content of the steel sheets (2) before the heat treatment is 0.15 mass % or more and 0.55 mass % or less.

**Patentansprüche**

1. Ein Schweißverfahren zum Punktschweißen von Stahlblechen (2) in einem Stapel,

wobei die Stahlbleche (2) wärmebehandelt und punktgeschweißt werden und eine Punktschweißzone (13) aus einem Schweißkern (13a) und einer Wärmeeinwirkungszone (13b) an dem Außenumfang des Schweißkerns (13a) gebildet wird,

wobei punktgeschweißte Stahlbleche (2) wärmebehandelt werden durch Anlegen eines hochfrequenten elektrischen Stroms an der Punktschweißzone (13), und

wobei der Durchmesser des Schweißkerns (13a) NR in mm der folgenden Bedingung genügt:

$$3 * \sqrt{t} \leq NR$$

wobei t die durchschnittliche Dicke der wärmebehandelten Stahlbleche in mm ist,

**dadurch gekennzeichnet, dass**:

eine in der Temperatur erhöhte Wärmeansammlungszone an dem Außenumfang des Schweißkerns (13a) gebildet wird und eine Härte des Schweißkerns (13a) zu 150% oder weniger der Härte der wärmebehandelten Stahlbleche (2) gemacht wird und eine Härte an der Wärmeeinwirkungszone (13b) zu 30% bis 90% der Härte an den Schweißkern (13) vor der Wärmebehandlung gemacht wird.

2. Das Schweißverfahren gemäß Anspruch 1, wobei eine Zugfestigkeit der wärmebehandelten Stahlbleche (2) 0,77 GPa oder mehr und 2.0 GPa oder weniger beträgt.

3. Das Schweißverfahren gemäß Anspruch 1 oder 2, wobei die wärmebehandelten Stahlbleche (2) die durch Anlassen behandelten Stahlbleche (2) sind, die auf einer Temperatur gleich oder höher als die Transformationstemperatur angehoben werden und schnell abgekühlt werden, oder durch eine Normalisierungs- oder Normalglühbehandlung behandelte Stahlbleche (2) sind.

4. Das Schweißverfahren gemäß einem der Ansprüche 1 bis 3, wobei ein Kohlenstoffgehalt der Stahlbleche (2) vor der Wärmebehandlung 0,15 Masseprozent oder mehr und 0,55 Masseprozent oder weniger beträgt.

**Revendications**

1. Procédé de soudage pour souder par point des tôles (2) d'acier en une pile,
dans lequel on traite thermiquement les tôles (2) d'acier et on les soude par point et on forme une zone (13) de soudure par point composée d'une pépite (13a) de soudure et d'une zone (13b) affectée par la chaleur à la périphérie extérieure de la pépite (13a) de soudure,
dans lequel on soumet à un revenu les tôles (2) d'acier soudées par point, en appliquant un courant électrique de haute fréquence à la zone (13) de soudure par point, et
dans lequel le diamètre de la pépite (13a) de soudure NR en mm satisfait l'expression conditionnelle suivante :

$$3 * \sqrt{t} \ \leq \ \text{NR}$$

dans laquelle t est l'épaisseur moyenne des tôles d'acier traitées thermiquement en mm,
**caractérisé en ce que** l'on forme une zone d'accumulation de chaleur élevée en température à la périphérie extérieure de la pépite (13a) de soudure et on fait en sorte qu'une dureté de la pépite (13a) de soudure soit inférieure ou égale à 150% de la dureté des tôles (2) d'acier traitées thermiquement et qu'une dureté de la zone (13b) affectée par la chaleur représente de 30% à 90% de la dureté à la pépite (13a) de soudure avant le revenu.

2. Procédé de soudage suivant la revendication 1, dans lequel une résistance à la traction des tôles (2) d'acier traitées thermiquement est supérieure ou égale à 0,77 GPa et inférieure ou égale à 2,0 GPa.

3. Procédé de soudage suivant la revendication 1 ou 2, dans lequel les tôles (2) d'acier traitées thermiquement sont des tôles (2) d'acier refroidies brusquement, élevées à une température supérieure ou égale à la température de transformation et refroidies rapidement ou des tôles (2) d'acier ayant subi un recuit de normalisation.

4. Procédé de soudage suivant l'une quelconque des revendications 1 à 3, dans lequel une teneur en carbone des tôles (2) d'acier, avant le traitement thermique, est supérieure ou égale à 0,15% en masse et inférieure ou égale à 0,55% en masse.

FIG. 1

FIG. 2

Heat Transfer Toward Peripheral Direction

Toward Electrodes

Heat Extraction

20

20

2

2

FIG. 3

FIG. 4

FIG. 5

FIG. 6

(a)

(b)

Hardness

Distance from Center of Naget

FIG. 7

EP 3 147 065 B1

| | Example 1 Comparative Example 1 | Example 2 Comparative Example 2 | Example 3 Comparative Example 3 |
|---|---|---|---|
| | Quenched Steel Plate | | Normarized Steel Plate |
| | At 200 deg.-C | AT 400 deg.-C | |
| Heating Sequence | | | |
| Grain Structure | Martensite | | Ferrite & Perlite |
| Hardness [HV0.3] (n=5) | 619 HV (R=29) | 436 HV (R=15) | 240 HV (R=24) |
| Tensile Strength [GPa] (n=3) | 1.95 (R=0.14) | 1.31 (R=0.11) | 0.77 (R=0.01) |

FIG. 8

EP 3 147 065 B1

**FIG. 9**

## Example 6

| | QT Steel Sheet |
|---|---|
| | Steel Sheet Tempered at 400 deg.-C |
| Heat Cycle | |
| Microstructure | Martensite |
| Vickers Hardness [HV0.3] (n=5) | 442Hv(R=6) |
| Tensile Strength [GPa] (n=2) | 1.4 |

FIG. 10

EP 3 147 065 B1

| | Line | Post HI-Freq. Appl. Power and Time | Tempering Temp. |
|---|---|---|---|
| Steel Plate of 1.95GPa | —— | Excluding | – |
| | —— | 73kW for 0.9s | 500~550 |
| Steel Plate of 1.31GPa | —— | Excluding | – |
| | —— | 73kW for 0.9s | 500~550 |
| Steel Plate of 0.77GPa | ---- | Excluding | – |
| | ---- | 73kW for 0.9s | 500~550 |

FIG. 11

EP 3 147 065 B1

| | | | Comparative Example 1 | Example 1 | Comparative Example 2 | Example 2 | Comparative Example 3 | Example 3 |
|---|---|---|---|---|---|---|---|---|
| | | | Steel Plate of 1.95 GPa | | Steel Plate of 1.31 GPa | | Steel Plate of 0.77GPa | |
| | | | Just Low-Freq. | Post Hi-Freq. Application | Just Low-Freq. | Post Hi-Freq. Application | Just Low-Freq. | Post Hi-Freq. Application |
| Naget View | Top View | Nugget | | | | | | |
| | | Opposite | | | | | | |
| 5mm | Side View (Nugget) | | | | | | | |
| Fracture Load [kN] Fracture Mode *2 | 1st. | | 2.42 × | 7.37 ○ | 2.86 × | 8.49 ○ | 1.15 × | 5.54 ○ |
| | 2nd. | | 1.49 × | 7.56 ○ | 2.25 × | 8.15 ○ | 1.24 × | 5.90 ○ |
| | 3rd. | | 1.90 × | 7.71 ○ | 2.73 × | 8.10 ○ | 1.26 × | 5.76 ○ |
| | Ave. | | 1.94 | 7.55 | 2.61 | 8.24 | 1.21 | 5.73 |
| | R | | 0.93 | 0.34 | 0.61 | 0.39 | 0.11 | 0.36 |
| Fracture Load/outer peripheral [kN/mm]*3 | | | 0.10 | 0.40 | 0.14 | 0.44 | 0.06 | 0.30 |

*2 Fracture modes: ○(Plug Fracture)  ×(Partial Plug or interface Fracture)
*3 Outer Peripheral (Length) is determined from Nugget Diameter in Crosssection of Macropattern

FIG. 12

EP 3 147 065 B1

FIG. 13

| | | Comparative Example 2 | Example 2 |
|---|---|---|---|
| | | Steel Plate of 1.31GPa | |
| | | Just Lo-Freq. Application | Post Hi-Freq. 73kW for 0.9s |
| ×5 | Macro Pattern | Nugget — Nugget Diameter: 6.0mm | Nugget — Nugget Diameter: 5.9mm |
| Grain Structure in Corona Bond | ×25 | | |
| | ×100 | | |
| | Hardness Distribution | | |

FIG. 14

FIG. 15

Load-Stroke Curve

| Diameter of Nugget [mm] | Line | Post Hi-Freq. Appl Powe and Time | Tempering Temp. |
|---|---|---|---|
| $3.8$ ($3\sqrt{t}$) | ········ | Excluding | - |
| | ········ | 73kW for 0.9s | 500 to 550 |
| $5.1$ ($4\sqrt{t}$) | – – | Excluding | - |
| | – ·· | 73kW for 0.9s | 500 to 550 |
| $6.7$ ($5.3\sqrt{t}$) | —— | Excluding | - |
| | ——— | 73kW for 0.9s | 500 to 550 |

Example 6

Example 7

Example 8

Comparative Example 6

Comparative Example 4

Comparative Example 5

Load [kN]

Stroke [mm]

FIG. 16

| | Comparative Example 4 | Example 6 | Comparative Example 5 | Example 7 | Comparative Example 6 | Example 8 |
|---|---|---|---|---|---|---|
| Diameter [mm] | 3.8 (3√t) | | 5.1 (4√t) | | 6.7 (5.3√t) | |
| Welding Condition | Just Low Freq. | Post Hi-Freq. Application | Just Low Freq. | Post Hi-Freq. Application | Just Low Freq. | Post Hi-Freq. Application |
| Observed Photo Image of the Weld Nuggets — Top View: Weld Nugget | (image) | (image) | (image) | (image) | (image) | (image) |
| Top View: Counter Side | (image) | (image) | (image) | (image) | (image) | (image) |
| Side View of Weld Nugget (5mm) | (image) | (image) | (image) | (image) | (image) | (image) |
| Fracture Load [kN] and fracture mode — 1st | 1.70 × | 7.22 ○ | 1.17 × | 6.66 ○ | 1.96 × | 10.11 ○ |
| 2nd | −*6 | 6.56 ○ | 1.47 × | 6.45 ○ | 1.43 × | 9.80 ○ |
| 3rd | −*6 | 6.75 ○ | −*6 | 6.78 ○ | −*6 | 9.90 ○ |
| Ave. | 1.70 | 6.84 | 1.32 | 6.63 | 1.70 | 9.94 |
| R | − | 0.66 | 0.30 | 0.33 | 0.53 | 0.31 |
| Fracture Load/Outer Peripheral [kN/mm] | 0.14 | 0.57 | 0.08 | 0.41 | 0.08 | 0.47 |

*4 Fracture Mode : ○ [Plug Failure]  × [Partial Plug Failure or Interface Fracture]
*5 Outer Peripheral (Length) is determined from Nugget Diameter in Crosssection of Macropattern
*6 Fractured at Setting of the Cruciform Test Peace

30

FIG. 17

FIG. 18

FIG. 19

FIG. 20

FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007332457 A
- WO 2011013793 A

- EP 2474381 A1